# EUROPEAN PATENT SPECIFICATION

(11) **EP 2 177 301 B1**
(45) Date of publication and mention of the grant of the patent: **30.10.2013**
(21) Application number: 08778020.1
(22) Date of filing: 03.07.2008
(51) Int. Cl.: B23K 26/20, B23K 9/12, B23K 9/127

(54) **WELDING EQUIPMENT AND WELDING METHOD**
SCHWEISSGERÄT UND SCHWEISSVERFAHREN
MATÉRIEL ET PROCÉDÉ DE SOUDAGE

(30) Priority: 04.07.2007 JP 2007176256
(43) Date of publication of application: 21.04.2010
(73) Proprietor: TOYOTA JIDOSHA KABUSHIKI KAISHA, Toyota-shi, Aichi-ken, 471-8571 (JP)
(72) Inventor: UCHIDA, Keisuke, Toyota-shi Aichi-ken 471-8571 (JP); NISHIO, Masahiro, Toyota-shi Aichi-ken 471-8571 (JP); OHNO, Masaki, Toyota-shi Aichi-ken 471-8571 (JP); MIYAJIMA, Hiroshi, Toyota-shi Aichi-ken 471-8571 (JP); TANZAWA, Masaki, Toyota-shi Aichi-ken 471-8571 (JP); MIKATA, Hironari, Toyota-shi Aichi-ken 471-8571 (JP); FUJIMOTO, Hiroki, Osaka-shi Osaka 541-0041 (JP); IHATA, Shinji, Toyota-shi Aichi-ken 471-8571 (JP)
(74) Representative: Kuhnen & Wacker
(86) International application number: PCT/JP2008/062439
(87) International publication number: WO 2009/005174

(56) References cited:
- EP-A1- 1 762 328
- WO-A1-2004/089570
- WO-A1-2008/037548
- DE-A1-102005 019 422
- JP-A- 2001 276 974
- US-A- 3 612 818
- US-A1- 2001 013 509

## Description

The present invention relates to welding equipment and a welding method, and more in detail, to welding equipment that is equipped with a torch for providing thermal energy to a welding portion and wire feeding means for feeding a filler wire to the welding portion and that joins joint objects by moving the torch and the wire feeding means along a welding line while feeding the wire to the welding portion by using the wire feeding means and providing thermal energy to that portion by using the torch, and also to a welding method of the welding equipment.

Note that, in the present invention, the welding mentioned above includes not only the case in which the joint objects serving as base materials are melted, but also the case of "brazing and soldering" in which the joint objects serving as base materials are prevented from being melted as far as possible.

### BACKGROUND ART

It has hitherto been widely practiced that the joint objects are welded by providing thermal energy to the welding portion by using the torch while feeding the filler wire to that portion by using the wire feeding means in order to mutually join the joint objects. In addition, it is practiced in the industrial world that the joint objects are mutually joined automatically by controlling the moving tracks of the torch and the wire feeding means so as to make the moving tracks follow the welding line by using tracking means (refer, for example, to Patent Document 1).

As shown in FIG. 13, Patent Document 1 discloses a process to join workpiece elements (joint objects) W' by means of an energy beam B', particularly a laser beam, using a filler wire F' fed by wire feeding means 2', in which process the filler wire F' is used as an element for mechanically scanning the shape of a joint (welding line) that is formed by the workpieces W' so that a tip of the filler wire F' melted in the energy beam B' is guided along the surface of the workpieces W' and a lateral guide surface because the joint has at least one lateral guide surface. In addition, Patent Document 1 discloses that the position of the wire feeding means 2' relative to the surface of the workpieces W' is automatically controlled by detecting the contact pressure of the filler wire F' with a sensor (lines 9 to 13 of column 6), and also that the wire F' is automatically guided by the wire feeding means 2' that moves the wire F' relative to the energy beam B' (lines 20 to 20 of column 6).

In addition, as shown in FIG. 14 (see also EP-A-1 762 328), conventionally known means can be used to conceive a mechanical tracking mechanism 3' that moves the torch and the wire feeding means 2' so as to follow the welding line Y' by providing a contactor 30' on the wire feeding means 2' or the like and making the contactor 30' touched with the joint objects W'. This mechanical tracking mechanism 3' has a structure in which the contactor 30' is fixed so as to project from the wire feeding means 2' by a predetermined length and the wire feeding means 2' can feed the filler wire F' at a predetermined angle and a predetermined length while the tip of the contactor is in contact with the joint objects W'.
Patent Document 1: United States Patent Publication No. 6596962 B2

### DISCLOSURE OF THE INVENTION

### Problems to be Solved by the Invention

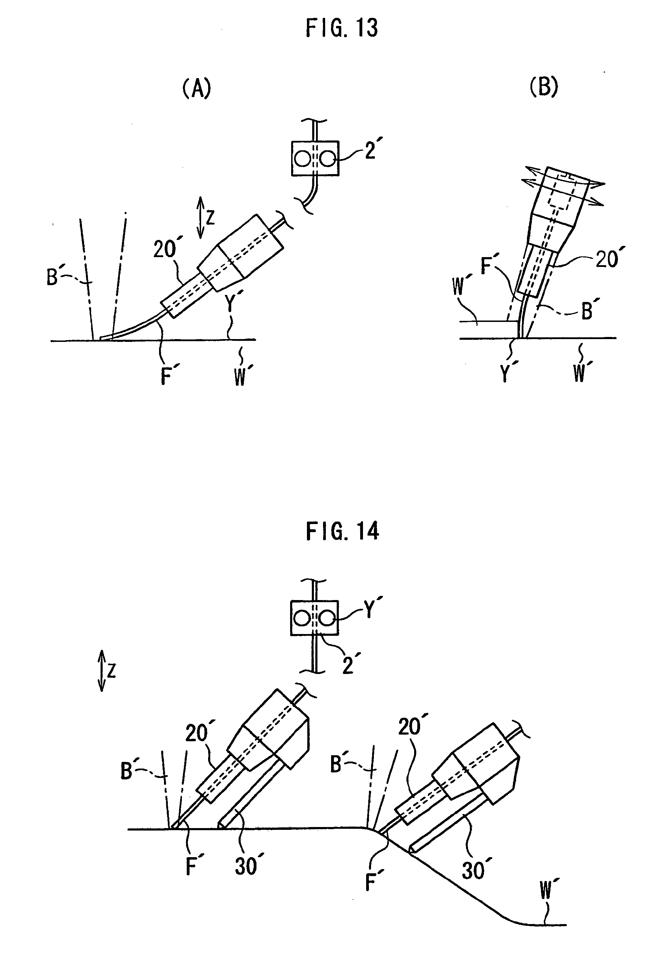

However, in the technique disclosed in Patent Document 1 among the related arts described above, the filler wire F' may bend on the way from a contact tip 20' to the joint objects W' as shown in FIG. 13, since generally the filler wire F' often has a core-set curling tendency because it is stretched from a wound roll and fed to the wire feeding means 2', and since the filler wire F' makes contact with the joint objects W' by being pressed strongly to the joint objects W' in the vertical direction (refer to an arrow in FIG. 13A) or in the horizontal (left-right) direction (refer to an arrow in FIG. 13B). Therefore, there has been a problem that errors occur among the torch, the wire feeding means 2', and the welding line Y' due to the bending of the filler wire F' or the like even if the filler wire F' is made contact with the joint objects W'. In addition, there has been a problem in the case of Patent Document 1 that the filler wire F' bends and thereby partially scrapes against the inner circumferential surface of the contact tip 20' composing the wire feeding means 2' so as to cause wear of the surface, resulting in an early wear of the contact tip 20'.

Moreover, among the related arts described above, in the mechanical tracking mechanism 3' provided with the contactor 30' fixed thereto so as to project from the wire feeding means 2' by the predetermined length as shown in FIG. 14, the height of the welding line Y' may change in FIG. 14. In such case, when attempting to move the wire feeding means 2' in the attitude required to maintain the wire feeding means 2' at a predetermined angle and distance relative to the welding portion while making the tip of the contactor 30' touched to the joint objects W', there have been problems that the position to which the energy beam B' is irradiated disagrees with the position to which the filler wire F' is fed, and that a limitation is imposed on the welding line Y' of the joint objects W' in order to avoid the aforementioned problem.

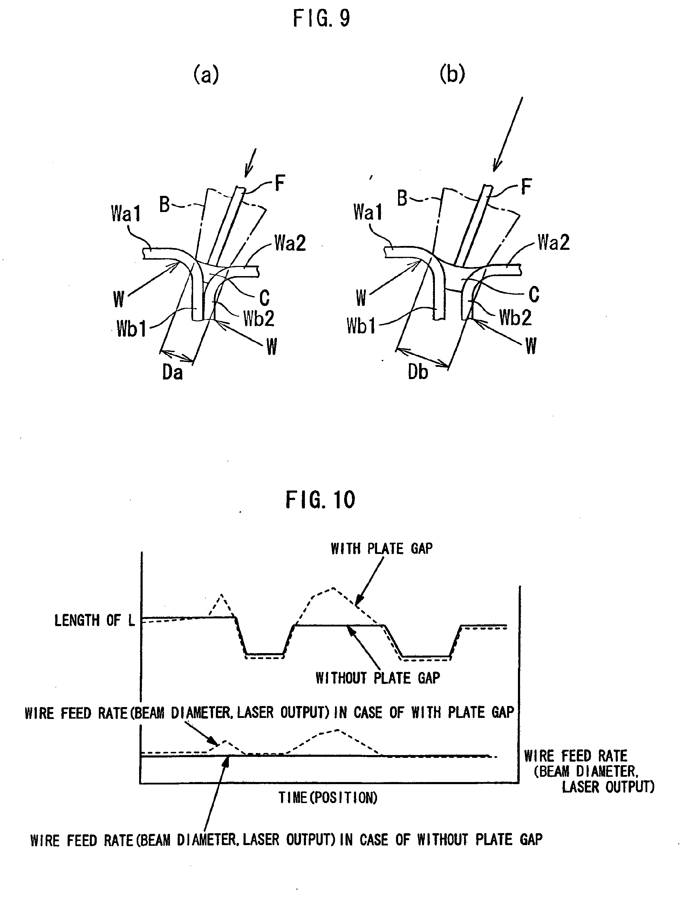

Furthermore, as is seen in FIGS. 9B, 11, and 12, if a gap S is generated between the joint objects W due to a forming error or the like, a bead C is dented or perforated, thereby generating welding defects including unfavorable external appearance and insufficient joining strength. There has been no related art that can address the problem of the generated gap.

In order to solve the problems described above, it is an object of the present invention to provide welding equipment and a welding method in which the moving tracks of a torch and wire feeding means can be controlled so as to accurately follow a welding line and can also be moved following the change in the height of the welding line so as to join joint objects in an appropriate manner, with a simple structure.

In addition, in order to solve the problems described above, it is another object of the present invention to provide welding equipment and a welding method in which, even if a gap is generated between the joint objects due to a forming error or the like, the joint objects can be mutually joined in an appropriate manner corresponding to the gap, with a simple structure.

### Means for Solving the Problems

In order to solve the problems described above, the invention of welding equipment according to claim 1 includes a torch that provides thermal energy to a welding portion, wire feeding means that feeds a filler wire to the welding portion, and tracking means that makes moving tracks of the torch and the wire feeding means follow a welding line, and in the welding equipment, joint objects are mutually joined by moving the torch and the wire feeding means along the welding line by using the tracking means while feeding the filler wire to the welding portion by using the wire feeding means and providing thermal energy to that portion by using the torch. The welding equipment is characterized by including a contactor that is a bar shape and is provided adjacent to the filler wire fed by the wire feeding means, the contactor being advanceable/retractable or rotatable to make contact with the joint object resiliently and control means that detects a gap generated between the joint objects based on a displacement of the contactor and controls at least one of the thermal energy from the torch and a feeding speed of the filler wire by the wire feeding means depending on the detected gap.

In order to solve the problems described above, the invention of a welding method according to claim 3 is a welding method in which joint objects are mutually joined by moving a torch and wire feeding means along a welding line by using tracking means while feeding a wire to a welding portion by using the wire feeding means and providing thermal energy to that portion by using the torch. The welding method is characterized in that a contactor that is a bar shape and is placed adjacent to the filler wire fed by the wire feeding means is provided, the contactor being advanceable/retractable or rotatable to make contact with the joint object resiliently, a gap generated between the joint objects is detected based on a displacement of the contactor, and at least one of the thermal energy from the torch and a feeding speed of a filler wire by the wire feeding means is controlled depending on the detected gap.

### Effects of the Invention

With the welding equipment according to the invention, it is possible to provide welding equipment in which, even in the case that a gap is generated between the joint objects due to a forming error or the like, the joint objects can be mutually joined in an appropriate manner in accordance with the size of such gap, with a simple structure that has the contactor that is a bar shape and is placed adjacent to the filler wire fed by the wire feeding means, the contactor being advanceable/retractable or rotatable to make contact with the joint object resiliently and the control means that detects the gap generated between the joint objects based on the displacement of the contactor and controls at least one of the thermal energy from the torch and the feeding speed of the filler wire by the wire feeding means depending on the detected gap.

With the welding method according to claim 3, it is possible to provide a welding method in which, even in the case that a gap is generated between the joint objects due to a forming error or the like, the joint objects can be mutually joined in an appropriate manner in accordance with the size of such gap, with a simple structure in which the contactor that is a bar shape and is placed adjacent to the filler wire fed by the wire feeding means is provided so as to be advanceable/retractable or rotatable to make contact with the joint object resiliently, and the gap generated between the joint objects is detected based on the displacement of the contactor, and at least one of the thermal energy from the torch and the feeding speed of a filler wire by the wire feeding means is controlled depending on the detected gap.

### BRIEF DESCRIPTION OF THE DRAWINGS

[FIG. 1] FIG. 1 shows views illustrated in outline for describing a welding equipment not covered by the present invention, in which FIG. 1A is a view from the lateral direction, and FIG. 1B is a view from the front in the movement direction.
[FIG. 2] FIG. 2 is a side view shown for describing an essential part of tracking means of the welding equipment of figure 1.
[FIG. 3] FIG. 3 is a side view shown for describing the state in which the welding equipment according to figures 1 and 2 adjusts itself to a welding line in the case that the height of the welding line changes.
[FIG. 4] FIG. 4 is a side view of an essential part showing an example other than that of FIG. 2.
[FIG. 5] FIG. 5 is a side view of an essential part shown for describing a case in which a torch for MIG arc welding is employed.
[FIG. 6] FIG. 6 is a side view of an essential part shown for describing a case in which a torch for TIG arc welding or plasma welding is employed.
[FIG. 7] FIG. 7 is a schematic diagram shown for describing the welding equipment of the present invention that is capable of detecting a gap generated in joint objects.
[FIG. 8] FIG. 8 shows views for describing the states in each of which the gap is detected by a contactor.
[FIG. 9] FIG. 9 shows views each of which illustrating the state of a bead welded depending on the detected gap.
[FIG. 10] FIG. 10 is a graph shown for describing the relation between the detected gap and control of an output of the torch or of a feeding speed of a filler wire by wire feeding means.
[FIG. 11] FIG. 11 is an explanatory diagram showing the state in which the gap in the lap fillet welded joint objects is detected by a contactor provided so as to be advanceable/retractable.
[FIG. 12] FIG. 12 is an explanatory diagram showing the state in which the gap in the lap fillet welded joint objects is detected by a contactor provided so as to be rotatable.
[FIG. 13] FIG. 13 shows views illustrated in outline for describing a related art that uses the filler wire for tracking, in which FIG. 13A is a view from the lateral direction, and FIG. 13B is a view from the front in the movement direction.
[FIG. 14] FIG. 14 is an explanatory diagram showing a related art in which the contactor is fixed.

### Description of the Reference Numerals

B: Laser beam, F: Filler wire, W: Joint object, Y: Welding line, C: Bead, S: Gap, D: Diameter of laser beam, 1: Torch, 2: Wire feeding means, 3: Tracking means, 30A: Contactor provided to freely advance/retract, 30B: Contactor provided to freely rotate, 7: Control means, 20: Contact tip

### BEST MODES FOR CARRYING OUT THE INVENTION

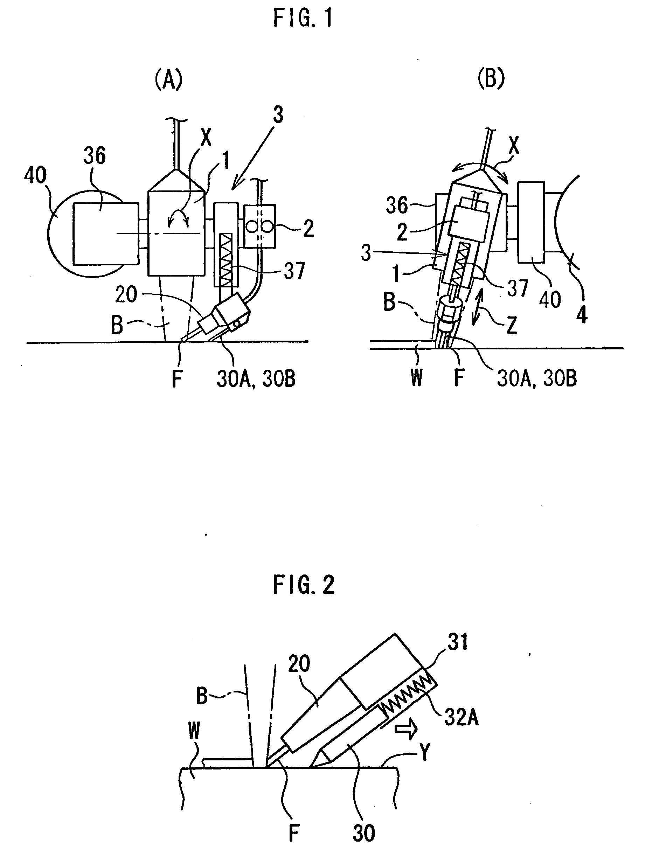

First of all, a welding equipment that is not covered by the present invention will be described in detail based on FIGS. 1 to 4.

In broad outline, welding equipment is provided with a torch 1 that provides thermal energy to a welding portion, wire feeding means 2 that feeds a filler wire F to the welding portion, and tracking means 3 that controls moving tracks of the torch 1 and the wire feeding means 2 such that they follow a welding line Y. The tracking means 3 has a contactor 30A or 30B provided such that the contactor can advance/retract or rotate to come into contact with a joint object W resiliently. The torch 1 and the wire feeding means 2 are moved so as to follow the welding line Y by touching the contactor 30A or 30B of the tracking means 3 resiliently to the joint object W while feeding the filler wire F to the welding portion by using the wire feeding means 2 and providing the thermal energy to that portion by using the torch 1, thereby joining the joint objects W.

As is seen in FIG. 1, the torch 1 provides the thermal energy by irradiating a laser beam B oscillated at a predetermined output power from a laser oscillator 10, and is equipped with a lens group 11 for irradiating such laser beam B in a controllable manner with a predetermined focal length and a predetermined diameter.

The wire feeding means 2 is equipped with a feeding device for feeding the filler wire F stretched from a wound roll in a controllable manner at a predetermined speed, and a contact tip 20 that feeds the filler wire F fed by the feeding device to the welding portion onto which the laser beam B is irradiated.

The contactor 30A is formed into approximately a bar shape, which is held in a housing 31 provided adjacent to the contact tip 20 of the wire feeding means 2, and can be advanced and retracted only in the axial direction thereof. In addition, a spring 32A is interposed between a base end of the contactor 30A and the housing 31, thus urging the contactor 30A so as to project resiliently from the housing 31. Note that a mechanism is provided to prevent the contactor 30A urged by the spring 32A to project from the housing 31 from coming off the housing 31. The shape of the tip of the contactor 30A touched to the joint object W can be chosen from a cone shape or a spherical shape, for example, depending on the cross sectional shapes of the joint objects W and so on.

As shown in FIG. 1, the torch 1, the contact tip 20, and the housing 31 that holds the contactor 30A are supported by rotation urging means 36 that is provided on an arm 40 of a robot 4 and composed of a motor, a spring, or the like. The torch 1 and the housing 31 are urged so that the filler wire F and the contactor 30A or 30B are pressed from the lateral direction against a stepped portion of the joint object W as shown by arrow X in FIG. 1B while rotating around the axial line shown by a one-dot chain line in FIG. 1A, and supported together by the arm of the robot 4 in a movable manner in the left-right direction (width direction) relative to the welding line Y. In addition, the contact tip 20, and the housing 31 that holds the contactor 30A are supported by extension urging means 37 that is installed in the torch 1 and provided with a spring and so on, and are urged so as to be pressed against the joint object W, as shown by arrow Z in FIG. 1B. The rotation urging means 36 and the extension urging means 37 are included in the tracking means 3. The arrangement of the torch 1, the contact tip 20, and the contactor 30A is such that they are arranged in the order of the contactor 30A, the contact tip 20, and the torch 1, from the end position toward the start position of welding on the welding line Y. In addition, the torch 1 is arranged so as to irradiate the laser beam B onto the surface of the joint objects W approximately in the vertical direction, whereas the contact tip 20 is arranged so as to feed the filler wire F in an inclined manner from the front in the direction of movement.

Next, a welding method that is not covered by the present invention will be described in detail along with the operation of the welding equipment, based on the case of using the welding equipment structured as described above.

In broad outline, a welding method is such that the contactor 30A or 30B that can advance/retract or rotate is provided as the tracking means 3, and the torch 1 and the wire feeding means 2 are moved so as to follow the welding line Y by making the contactor 30A or 30B resiliently touched to the joint object W while feeding the filler wire F to the welding portion by using the wire feeding means 2 and providing the thermal energy to that portion by using the torch 1, thereby joining the joint objects W.

As described above, because the torch 1 and the contact tip 20 are supported by the arm 40 of the robot 4, and because the contactor 30A is held so as to be advanceable and retractable only in the axial direction thereof in the housing 31 provided on the contact tip 20 of the wire feeding means 2, the contactor 30A cannot be displaced in the left-right direction (X direction) but can be displaced in the height direction (Z direction) relative to the torch 1 and the contact tip 20. In addition, the torch 1, the contact tip 20, and the housing 31 that holds the contactor 30A are supported together by the arm 40 of the robot 4 in a movable manner in the left-right direction (X direction). As a result, when the robot 4 drives the torch 1, the contact tip 20, and the contactor 30A that are supported together by the arm 40 to move from the start position toward the end position of welding while the tip of the contactor 30A is pressed to touch the joint object W resiliently, the contactor 30A is moved along the welding line Y in accordance with the shape of the joint object W. Then, the torch 1 and the contact tip 20 that cannot be displaced in the left-right direction (X direction) relative to the contactor 30A are moved along the welding line Y in accordance with the shape of the joint object W in the same manner as the contactor 30A, that is, in the manner of being displaced in the left-right direction (X direction) by following the welding line Y.

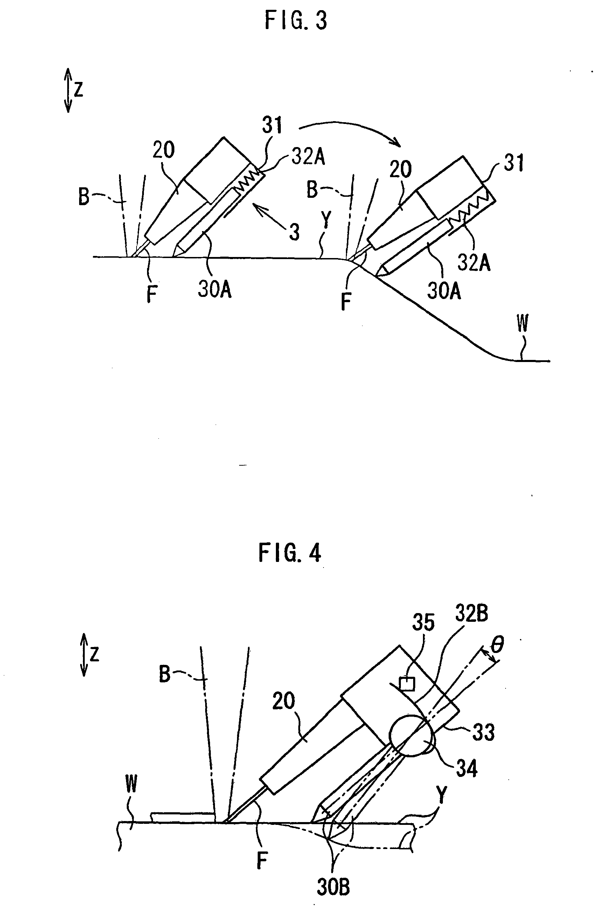

Moreover, as shown in FIG. 3, in the case that the height (in the up-down [Z] direction in FIG. 3) of the welding line Y changes depending on the shape of the joint object W, the contactor 30A maintains the state of being always in contact with the joint object W by being advanced and retracted following the change in the height in the Z direction of the welding line Y, because the contactor 30A is held so as to be advanceable and retractable only in the axial direction thereof in the housing 31 and is urged resiliently by the spring 32A. Consequently, the torch 1 and the contact tip 20 move so as to follow the welding line Y accurately without being influenced by the change in the height of the welding line Y in the Z direction, thereby enabling welding the joint objects W appropriately.

Furthermore, the contactor 30A is inclined in the forward direction of movement in the state of touching the tip thereof to the joint object W by being provided on the contact tip 20 that is supported so as to be inclined at a predetermined angle. As a result, when the contactor 30A is moved together with the torch 1 and the contact tip 20, the contactor 30A is not caught by the joint object W due to the shape thereof, and therefore the movement thereof is not obstructed.

Next, a modification of the previous example will be described based on FIG. 4. Note that the portions that are the same as or corresponding to those of the embodiments described above will be assigned the same reference numerals while descriptions thereof will be omitted, and only the different portions will be described.

While the contactor 30A is provided so as to be advanceable/retractable in the example described above, the contactor 30B is provided so as to be rotatable.

A bracket 33 is provided on the contact tip 20, and a rotating shaft 34 is provided in a base end portion or an intermediate portion of the contactor 30B. The rotating shaft 34 is pivoted to the bracket 33 in a rotatable manner so as to extend in the direction perpendicular to the welding line Y. In addition, a spring 32B is provided on the rotating shaft 34, and one end of the spring 32B is engaged with a stopper 35 provided on the bracket 33. Thus, the contactor 30B is urged to rotate so that the tip thereof is pressed resiliently against the joint object W, and inclined forward in the movement direction Y, while being not displaceable in the left-right direction relative to the torch 1 and the contact tip 20.

In the welding equipment structured as described above, as shown by chain lines in FIG. 4, even in the case that the height of the welding line Y changes in the Z direction, the contactor 30B maintains the state of being always in contact with the joint object W by rotating following the change in the height of the welding line Y in the Z direction because the contactor 30B is urged such that the tip thereof is pressed resiliently against the joint object W. Consequently, the torch 1 and the contact tip 20 move so as to follow the welding line Y accurately without being influenced by the change in the height of the welding line Y in the Z direction, thereby enabling welding the joint objects W appropriately. In addition, because the contactor 30B is inclined forward in the movement direction in the state of touching the tip thereof to the joint object W, the contactor 30B is not caught by the joint object W due to the shape thereof when the contactor 30B is moved together with the torch 1 and the contact tip 20. Therefore, the movement of the contactor 30B is not obstructed.

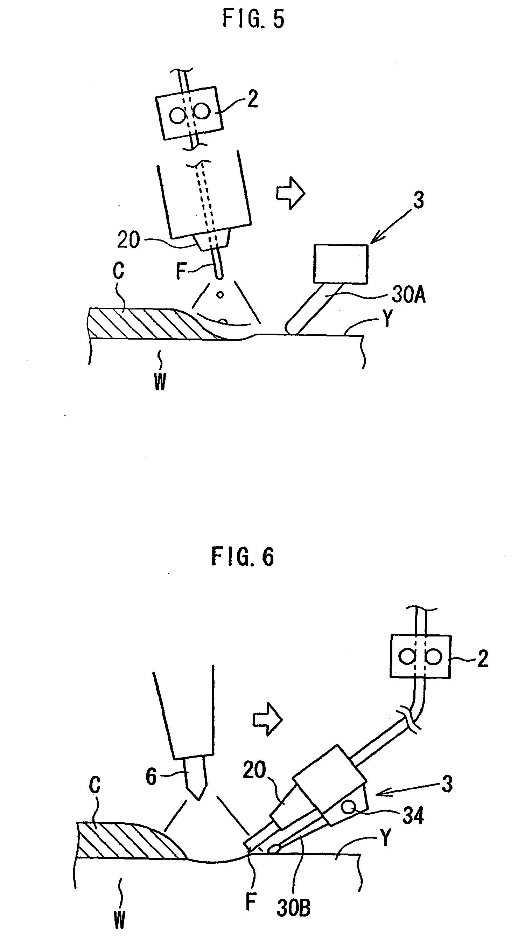

Note that the present invention can be applied to the case where the joint objects W are joined by brazing and soldering in which the joint objects are not melted, and can also be applied to the case where the joint objects W are melted together with the filler wire F. In addition, the present invention can be applied to joints such as butt joints, corner joints, T joints, edge joints, and lap joints. Moreover, the present invention is not limited to the embodiments described above, but can be applied to MIG arc welding, as shown in FIG. 5. Furthermore, the present invention can be applied to TIG arc welding and plasma welding that include a tungsten electrode 6 as shown in FIG. 6.

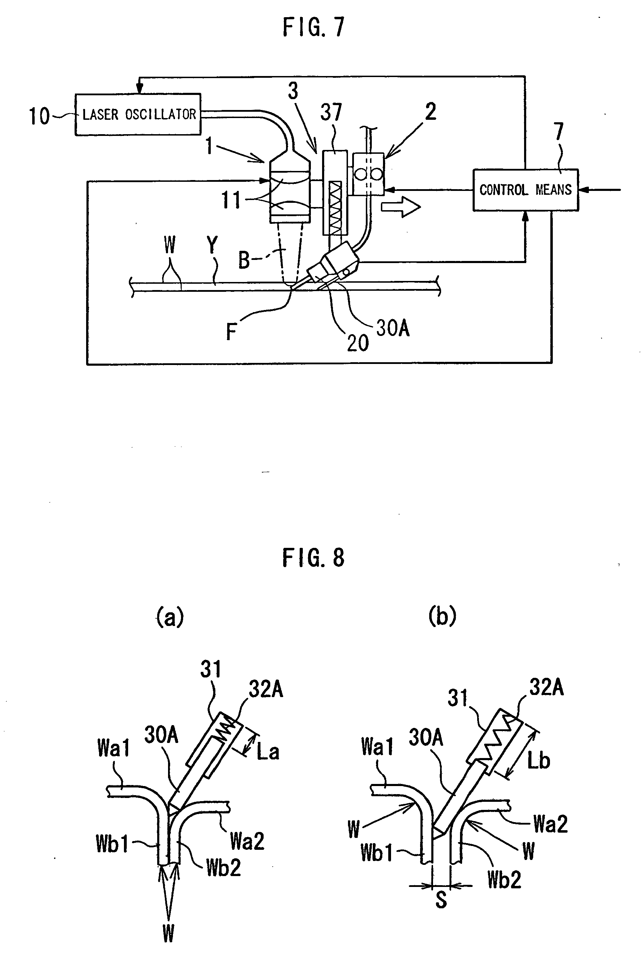

Next, an embodiment of welding equipment of the present invention will be described in detail based on FIGS. 7 to 12. Note that the portions that are the same as or corresponding to those of the example described above will be assigned the same reference numerals while descriptions thereof will be omitted, and only the different portions will be described.

In broad outline, welding equipment of the present invention is provided with a torch 1 that provides thermal energy to a welding portion, wire feeding means 2 that feeds a filler wire F to the welding portion, tracking means 3 that controls moving tracks of the torch 1 and the wire feeding means 2 so as to follow a welding line, a contactor 30A or 30B provided so as to be advanceable/retractable or rotatable to make contact with a joint object W resiliently, and control means 7 that detects a gap S generated between the joint objects W based on a displacement of the contactor 30A or 30B and controls at least one of the thermal energy from the torch 1 and a feeding speed of the filler wire F by the wire feeding means 2 depending on the detected gap S. The torch 1 and the wire feeding means 2 are moved along the welding line Y by the tracking means 3 while feeding the filler wire F to the welding portion by using the wire feeding means 2 and providing the thermal energy to that portion by using the torch 1, thereby joining the joint objects W.

As shown in FIG. 7, the torch 1 irradiates a laser beam B oscillated at a predetermined output power from a laser oscillator 10, and is equipped with a lens group 11 for irradiating such laser beam B in a controllable manner with a predetermined focal length and a predetermined diameter. In addition, the wire feeding means 2 is equipped with a contact tip 20 that feeds the filler wire F to the welding portion onto which the laser beam B is irradiated.

The contactor 30A is formed into approximately a bar shape, which is held in a housing 31 provided adjacent to the contact tip 20 of the wire feeding means 2, and can be advanced and retracted only in the axial direction thereof, in the present embodiment. In addition, a spring 32A is interposed between the base end of the contactor 30A and the housing 31, thus urging the contactor 30A so as to project resiliently from the housing 31.

As are seen in FIG. 1, the torch 1, the contact tip 20 of the wire feeding means 2, and the housing 31 that holds the contactor 30A are supported together by an arm 40 of a robot 4 in a movable manner in the left-right direction shown by arrow X. The arrangement of the torch 1, the contact tip 20 of the wire feeding means 2, and the contactor 30A is such that they are arranged in the order of the contactor 30A, the contact tip 20 of the wire feeding means 2, and the torch 1, from the end position toward the start position of welding on the welding line Y. In the embodiment shown in FIGS. 8 and 9, the joint objects W are composed of bent plates, and joined in the state in which horizontal portions Wa1 and Wa2 in FIGS. 8 and 9 are different in height from each other. Note that the welding line Y extends in the left-right direction in FIG. 7, and in the direction perpendicular to the drawing plane in FIGS. 8 and 9.

In the present embodiment, as shown in FIG. 8, the contactor 30A is arranged in the direction approximately perpendicular to the welding line Y so as to be inclined toward the lower horizontal portion Wa2, and is in contact with the welding portion of the both joint objects W resiliently.

Next, an embodiment of a welding method of the present invention will be described in detail along with the operation of the welding equipment, based on the case of using the welding equipment structured as shown in FIGS. 7 to 9. Note that the portions that are the same as or corresponding to those of the example described above will be assigned the same reference numerals while descriptions thereof will be omitted, and only the different portions will be described.

In broad outline, a welding method of the present invention is such that the torch 1 and the contact tip 20 are moved along the welding line Y by the tracking means 3 while feeding the filler wire F to the welding portion using the wire feeding means 2 and providing the thermal energy to that portion using the torch 1, thereby joining the joint objects W, and such that the gap S generated between the joint objects W is detected based on the displacement of the contactor 30A or 30B provided so as to be advanceable/retractable or rotatable to make contact with a joint object W resiliently, and at least one of the thermal energy from the torch 1 and the feeding speed of the filler wire F by the wire feeding means 2 is controlled depending on the detected gap S.

As shown in FIGS. 8A and 9A, the bent plates W serving as the joint objects are normally positioned and held so that the welding portions thereof are close to each other. However, depending on the forming accuracy of the plates W or the like, the gap S may be generated because vertical portions Wb1 and Wb2 of the plates come away from each other partially or entirely, as shown in FIGS. 8B and 9B. Therefore, in the present embodiment, a distance L between the base end surface of the contactor 30A and the housing 31 is first detected when the contactor 30A is brought into contact with the welding portions of the both plates W resiliently before welding. That is, the distance between the base end surface of the contactor 30A and the housing 31 has a length La when the gap S is not generated between the welding portions of the both plates W as shown in FIG. 8A, whereas the distance between the base end surface of the contactor 30A and the housing 31 has a distance Lb when the gap S is generated between the welding portions of the both plates W because the contactor 30A is displaced so as to project more from the housing 31, as shown in FIG. 8B.

The control means 7 receives the distance L thus detected. If the distance L is large, the control means 7 judges that the gap S in accordance with the level of the distance L is generated, as shown in FIG. 10. Then, the control means 7 increases the feeding speed of the filler wire F to increase the amount of feed per unit time to the welding portion, and expands a diameter D of the laser beam B at the welding portion from Da to Db depending on the size of the gap S, and/or increases the output power of the laser beam B depending on the size of the gap S. Accordingly, as shown in FIG. 9B, a good external appearance is obtained without generating a dent or hole in a bead C on the welding portions of the both plates W between which the gap S is generated, thus enabling welding the both plates W in an appropriate manner.

Note that the present invention is not limited to the present embodiment. The displacement of the contactor 30A can also be detected by detecting a load or a pressure of the spring 32A that urges the contactor 30A to be projected as shown in FIG. 8.

In addition, the present invention can also employ the contactor 30B that is provided so as to be rotatable as shown in FIG. 4, instead of the contactor 30A that is provided so as to be advanceable/retractable as shown in FIG. 8. In this case, the displacement of the contactor 30B can be detected based on an angle thereof or on a load of the spring 32B.

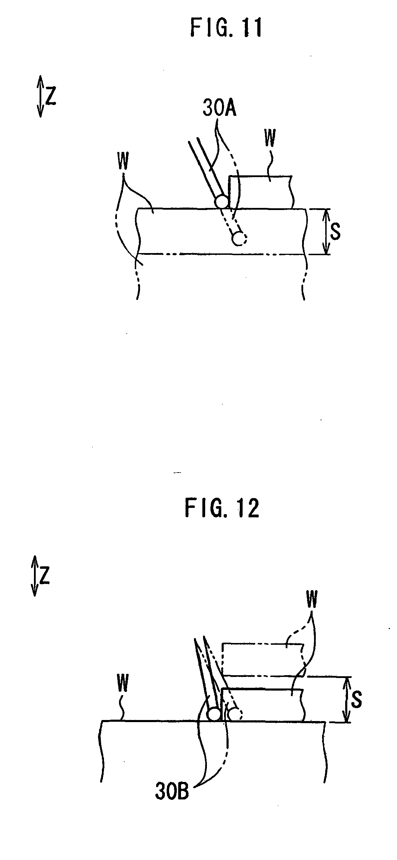

FIG. 11 is shown for describing the case in which the gap S generated between the both joint objects W is detected by the contactor 30A that is provided so as to be advanceable/retractable, in the case of welding the joint objects W by lap fillet welding. The position of the contactor 30A in contact with the joint objects W when the gap S is not generated between the joint objects W is shown by a solid line. On the other hand, the position of the contactor 30A in contact with the joint objects W when the gap S is generated between the joint objects W is shown by a chain line. That is, the position of the contactor 30A differs depending on the gap S generated between the joint members W. Therefore, the present invention employs the method that detects the gap S generated between the joint objects W by detecting the change in position, that is, the displacement of the contactor 30A, such as the length by which the contactor 30A projects, the distance L between the base end surface of the contactor 30A and the housing 31, or the load of the spring 32A.

FIG. 12 is shown for describing the case in which the gap S generated between the joint objects W is detected by the contactor 30B that is provided so as to be rotatable, in the case of welding the joint objects W by lap fillet welding. The position of the contactor 30B in contact with the joint objects W when the gap S is not generated between the joint objects W is shown by a solid line. On the other hand, the position of the contactor 30B in contact with the joint objects W when the gap S is generated between the joint objects W is shown by a chain line. That is, the position of the contactor 30B differs depending on the gap S generated between the joint members W. Therefore, the present invention employs the method that detects the gap S generated between the joint objects W by detecting the displacement of the contactor 30B, such as the rotation angle θ of the contactor 30B or the load of the spring 32B urging the contactor 30B (refer to FIG. 4).

Moreover, the present invention is not limited to the embodiments described above. In order to detect the gap S generated between the joint objects W, it is not necessarily required to incline the contactor 30A or 30B in the direction perpendicular to the welding line Y. Also, by forming a portion of the contactor 30A or 30B that touches the joint object W larger than the maximum assumed size of the gap S, it is possible to detect the gap S generated between the joint objects W even in the case in which the contactor 30A or 30B is provided either so as to extend in the direction perpendicular to the surface of the joint object W or so as to be inclined forward in the movement direction.

Furthermore, the present invention can be applied to the case in which a high-energy beam such as an electron beam is irradiated instead of the laser beam B, and can be employed for the MIG arc welding (refer to FIG. 5), the TIG arc welding, or the plasma welding (refer to FIG. 6) in the same manner as those of the embodiments described above. The contactor 30A or 30B is not limited to the case of being configured so as to contact resiliently with the joint object W by being urged by the spring 32A or 32B, but can be configured so as to contact resiliently with the joint object W by being advanced/retracted or rotated, for example, by an own weight of the contactor 30A or 30B.

## Claims

1. Welding equipment which includes:
a torch (1) that provides thermal energy to a welding portion;
wire feeding means (2) that feeds a filler wire (F) to the welding portion; and
tracking means (3) that makes moving tracks of the torch and the wire feeding means follow a welding line (Y);
and in which joint objects (W) are mutually joined by moving the torch and the wire feeding means along the welding line by using the tracking means while feeding the filler wire to the welding portion by using the wire feeding means and providing thermal energy to that portion by using the torch, and
a contactor (30) that is a bar shape and is provided adjacent to the filler wire fed by the wire feeding means, wherein the contactor is advanceable/retractable or rotatable to make contact with the joint object resiliently;
the welding equipment being **characterized by** comprising
control means (7) that detects a gap (S) generated between the joint objects based on a displacement of the contactor and controls at least one of the thermal energy from the torch and a feeding speed of the filler wire by the wire feeding means depending on the detected gap.

2. The welding equipment according to claim 1, wherein the contactor is provided at the tracking means.

3. A welding method, in which joint objects are mutually joined by moving a torch and wire feeding means along a welding line by using tracking means while feeding a wire to a welding portion by using the wire feeding means and providing thermal energy to that portion by using the torch, wherein
a contactor that is a bar shape and is placed adjacent to the filler wire fed by the wire feeding means is provided so as to be advanceable/retractable or rotatable to make contact with the joint object resiliently,
the welding method **characterized in that**
a gap generated between the joint objects is detected based on a displacement of the contactor, and
at least one of the thermal energy from the torch and a feeding speed of a filler wire by the wire feeding means is controlled by a control means depending on the detected gap.

4. The welding method according to claim 3, wherein
the contactor is provided at the tracking means.

## Patentansprüche

1. Schweißausrüstung, die beinhaltet:
einen Brenner (1), der einem Schweißabschnitt thermische Energie zuführt;
ein Drahtzuführmittel (2), das dem Schweißabschnitt einen Schweißdraht (F) zuführt; und
ein Spurmittel (3), durch das die Bewegungsspuren des Brenners und des Drahtzuführmittels einer Schweißlinie (Y) folgen;
und in dem zusammengefügte Objekte (W) wechselseitig zusammengefügt werden, indem der Brenner und das Drahtzuführmittel unter Verwendung des Spurmittels entlang der Schweißlinie bewegt werden, während der Schweißdraht dem Schweißabschnitt unter Verwendung des Drahtzuführmittels zugeführt wird und thermische Energie an diesen Abschnitt mithilfe des Brenners zugeführt wird,
und
einen Kontaktgeber (30), der eine barrenförmige Form aufweist und sich neben dem Schweißdraht befindet, der von dem Drahtzuführmittel zugeführt wird,
wobei der Kontaktgeber ausziehbar/einziehbar oder drehbar ist, um das zusammengefügte Objekt elastisch zu berühren;
wobei die Schweißausrüstung **dadurch gekennzeichnet ist, dass** sie aufweist:
ein Steuermittel (7), das auf Basis einer Verschiebung des Kontaktgebers eine Lücke (S) erfasst, die zwischen den zusammengefügten Objekten erzeugt wird und zumindest die thermische Energie von dem Brenner und/oder eine Zuführgeschwindigkeit des Schweißdrahts von dem Drahtzuführmittel abhängig von der erfassten Lücke steuert.

2. Schweißausrüstung nach Anspruch 1, wobei sich der Kontaktgeber bei dem Spurmittel befindet.

3. Schweißverfahren, in dem zusammengefügte Objekte wechselseitig zusammengefügt werden, indem ein Brenner und ein Drahtzuführmittel unter Verwendung eines Spurmittels entlang einer Schweißlinie bewegt werden, während ein Draht einem Schweißabschnitt unter Verwendung des Drahtzuführmittels zugeführt wird und thermische Energie an diesen Abschnitt mithilfe des Brenners zugeführt wird, wobei
ein Kontaktgeber, der eine barrenförmige Form aufweist und sich neben dem Schweißdraht befindet, der von dem Drahtzuführmittel zugeführt wird, so ausgeführt ist, dass er ausziehbar/einziehbar oder drehbar ist, um das zusammengefügte Objekt elastisch zu berühren,
wobei das Schweißverfahren **dadurch gekennzeichnet ist, dass** eine Lücke, die zwischen den zusammengefügten Objekten erzeugt wird, auf Basis einer Verschiebung des Kontaktgebers erfasst wird, und
zumindest die thermische Energie von dem Brenner und/oder eine Zuführgeschwindigkeit eines Schweißdrahts von dem Drahtzuführmittel abhängig von der erfassten Lücke von einem Steuermittel gesteuert wird.

4. Schweißverfahren nach Anspruch 3, wobei sich der Kontaktgeber bei dem Spurmittel befindet.

## Revendications

1. Équipement de soudage qui inclut :
une torche (1) qui fournit de l'énergie thermique à une partie à souder;
un moyen (2) de délivrance de fil qui délivre un fil de métal d'apport (F) à la partie à souder ; et
un moyen (3) de guidage qui fait que les trajectoires de déplacement de la torche et du moyen de délivrance de fil suivent une ligne de soudure (Y) ;
et dans lequel des objets à joindre (W) sont joints mutuellement par déplacement de la torche et du moyen de délivrance de fil le long de la ligne de soudure en utilisant le moyen de guidage tout en délivrant le fil de métal d'apport à la partie à souder en utilisant le moyen de délivrance de fil et en fournissant de l'énergie thermique à cette partie en utilisant la torche ; et
un palpeur (30) qui a la forme d'une tige et qui est placé adjacent au fil de métal d'apport délivré par le moyen de délivrance de fil, dans lequel le palpeur peut élastiquement avancer/se rétracter ou tourner pour faire contact avec l'objet à joindre,
l'équipement de soudage étant **caractérisé en ce qu'**il comprend :
un moyen (7) de commande qui détecte un écartement (S) engendré entre les objets à joindre en se basant sur un déplacement du palpeur et qui commande, en fonction de l'écartement détecté, au moins l'une de l'énergie thermique issue de la torche et de la vitesse de délivrance du fil de métal d'apport par le moyen de délivrance de fil.

2. Équipement de soudage selon la revendication 1, dans lequel le palpeur est prévu au niveau du moyen de guidage.

3. Procédé de soudage, dans lequel des objets à joindre sont joints mutuellement par déplacement d'une torche et d'un moyen de délivrance de fil le long d'une ligne de soudure en utilisant un moyen de guidage tout en délivrant un fil à une partie à souder en utilisant le moyen de délivrance de fil et en fournissant de l'énergie thermique à cette partie en utilisant la torche,
dans lequel un palpeur qui a la forme d'une tige et qui est placé adjacent au fil de métal d'apport délivré par le moyen de délivrance de fil est disposé de façon à pouvoir élastiquement avancer/se rétracter ou tourner pour faire contact avec l'objet à joindre,
le procédé de soudage étant **caractérisé :**
**en ce qu'**un écartement engendré entre les objets à joindre est détecté en se basant sur un déplacement du palpeur ; et
**en ce qu'**au moins l'une de l'énergie thermique issue de la torche et de la vitesse de délivrance d'un fil de métal d'apport par le moyen de délivrance de fil est commandée par un moyen de commande en fonction de l'écartement détecté.

4. Procédé de soudage selon la revendication 3, dans lequel le palpeur est prévu au niveau du moyen de guidage.
